Europäisches Patentamt

(19) European Patent Office (11) Publication number: **0 252 458**
Office européen des brevets **B1**

# (12) EUROPEAN PATENT SPECIFICATION

(45) Date of publication of the patent specification: (51) Int. Cl.⁵: **A01F 15/14, A01F 15/08**
27.12.90

(21) Application number: **87109638.4**

(22) Date of filing: **04.07.87**

(54) **Machine for forming a cylindrical bale of crop.**

(30) Priority: **08.07.86 US 883239**

(43) Date of publication of application:
**13.01.88 Bulletin 88/2**

(45) Publication of the grant of the patent:
**27.12.90 Bulletin 90/52**

(84) Designated Contracting States:
**BE DE ES FR GB IT**

(56) References cited:
**EP-A- 235 650
DE-A- 2 705 101
FR-A- 734 089
FR-A- 2 558 030
GB-A- 2 034 273
GB-A- 2 124 975
GB-A- 2 137 927
US-A- 2 101 328
US-A- 4 407 113
US-A- 4 428 282**

(73) Proprietor: **DEERE & COMPANY, 1 John Deere Road, Moline, Illinois 61265(US)**

(72) Inventor: **Verhulst, Michael Joseph, Box189 R.R. 5, Ottumwa Iowa 52501(US)**
Inventor: **Anstey, Henry Dennis, Box188A R.R. 4, Ottumwa Iowa 52501(US)**

(74) Representative: **Feldmann, Bernhard, DEERE & COMPANY European Office Patent Department Steubenstrasse 36-42 Postfach 100862, D-6800 Mannheim 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a machine for forming a cylindrical bale of crop having a baling chamber limited by spaced apart belts trained side-by-side over support rolls.

Such a machine is described in our US-A-4,428,282.

Machines, towed by a tractor, for forming large cylindrical bales of hay or other crop (so called "round balers") are well known. As the machine advances, the crop is removed from a windrow by a pick-up mechanism and delivered rearwardly to a baling chamber where it is rolled into a bale. The completed bale is tied with twine to maintain its shape and is discharged through a gate formed by a rear portion of the machine.

Proposals have also been made to employ net or foil as a wrap material instead of twine. In, for example, GB-A-2 124 975 net is delivered in the region of the top of the machine from a roll of the net by a pair of feed rolls to a completed bale in a baling chamber formed by fixed position rolls, and on a predetermined length having passed between the feed rolls the net is severed. A similar arrangement and baler is described in GB-A-2 137 927, but the wrap material is delivered to the front of the machine. Furthermore, a guide is provided initially to direct the free end of the cut material to the chamber, but immediately the wrap material is engaged with the bale the material becomes taut and is lifted clear of the guide. This guide has an end portion which slightly curves complementarily to the associated roll of the chamber to direct the free end of the cut material toward the bale.

In our co-pending published European patent application EP-A 235 650 published we have described a net wrap mechanism for a round baler of which the baling chamber is defined by belts trained over support rolls and increases in size to accommodate the growing bale. The entry to the baling chamber is on the underside of the machine. The net wrap mechanism is mounted at the rear of the machine on the discharge gate thereof. Net is advanced by a pair of feed rolls to a guide plate in contact with the belts which pull the net along the surface of the plate. The plate curves upwardly at its discharge end to maintain contact of the net with the belts.

In the case of GB-A-2 124 975 the net is fed to the bale chamber in a downward almost vertical direction and in GB-A-2 137 927 the wrap material is furnished in a slightly downward almost horizontal direction approximately at the mid-region of the bale. The wrap material passes in both instances between neighbouring rolls to the bale.

However if, as in our aforesaid European patent application, the wrap material enters the baling chamber on the underside of the machine it must finally travel upwardly and be carried round a support roll and its associated belts which are arranged spaced apart over the width of the machine giving a broken surface of contact for the net. Furthermore, the gaps between the belts permit some deviation of the belts so causing a rather uneven pull to be exerted on the wrap material.

The present invention improves the guidance of the wrap material to a round baler of which the baling chamber is limited by belts trained side-by-side over support rolls.

According to the present invention the machine has a guide assembly for net, sheet or like wrap material for maintaining the material in contact with the belts over a said roll comprising a support extending transversely of the belts and fingers extending from the support longitudinally of the belts, protruding into the spaces between the belts and curving with the path of the belts about the said roll so that the wrap material maintains contact with the belts and is also directed into spaces between the belts as it passes into the baling chamber.

In this way the wrap material has good contact with the belts even as it turns upwardly into an underside inlet to the baling chamber, and is drawn by the belts, without slippage, to the bale. Interposing the fingers between the belts ensures that their deviation is reduced and that the belts afford a more even pull on the wrap material.

An embodiment of the invention will now be described with reference to the accompanying diagrammatic drawings in which:

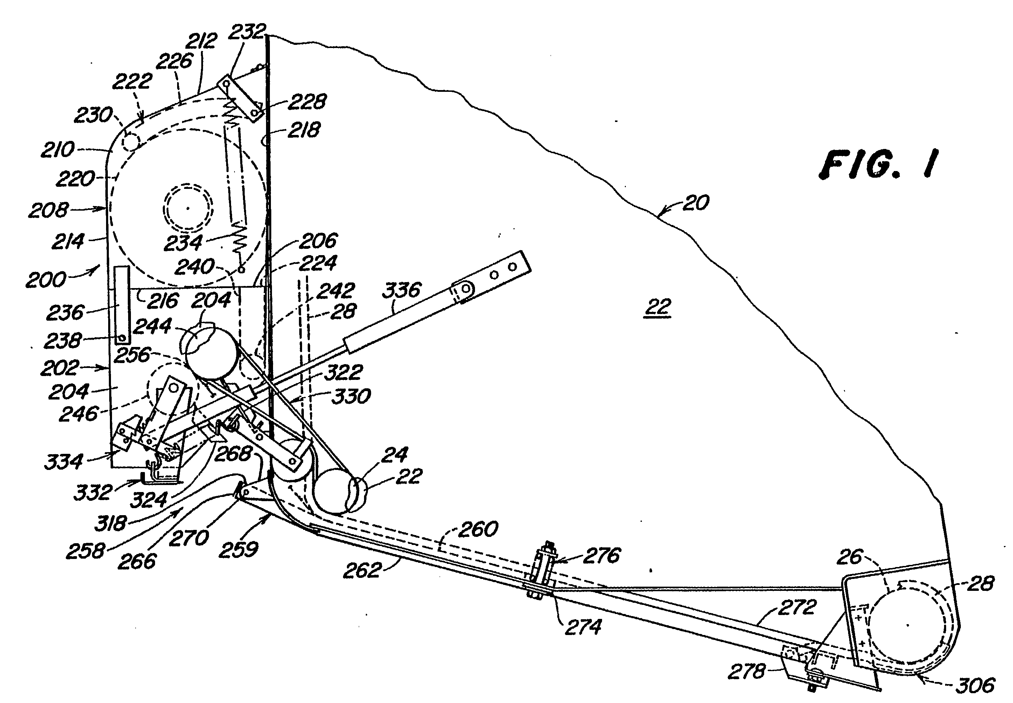

Fig. 1 is a right side elevational view of a portion of a bale-discharge gate of a machine for forming cylindrical bales of crop on which gate a wrapping mechanism having a guide assembly of the present invention is mounted,

Fig. 2 is an enlarged right side elevational view showing the forward end of the guide assembly shown in Fig. 1,

Fig. 3 is a sectional view taken along line 3--3 of Fig. 2 showing a guide pan and guide finger assembly support structure and

Fig. 4 is a sectional view taken along line 4--4 of Fig. 2 showing the guide fingers located in gaps between bale-forming belts of the machine.

Initially, it should be noted that only one component is shown of some components described herein as occuring in pairs or multiples and it is to be understood that the construction of the component is the same as or similar to the construction of the shown component.

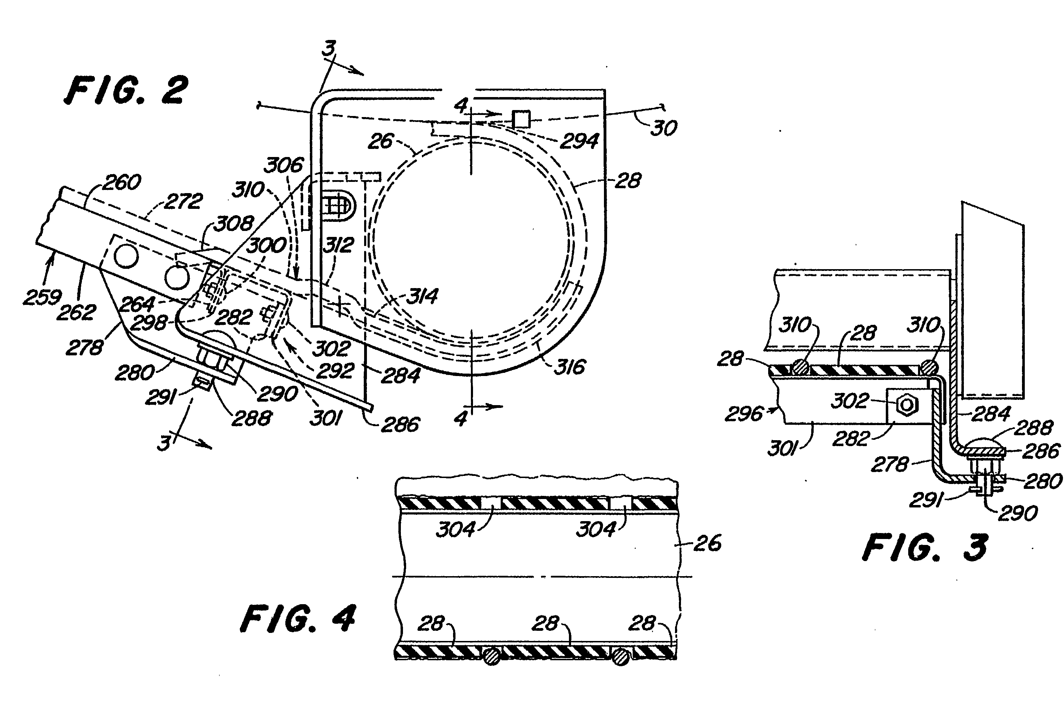

Referring now to the drawings, there is shown a portion of a bale-discharge gate 20 of a large round baler similar in construction to that disclosed in US-A-4,428,282. Extending between opposite sidewalls 22 of the gate are lower rear and lower front bale-forming belt support rolls 24 and 26, respectively. A plurality of bale-forming belts 28 is supported in side-by-side, spaced relationship across the support rolls 24 and 26 and other rolls of the baler and operate in a manner set forth in the said US-A-4,428,282 to roll crop products, introduced into a bale-forming chamber formed in part by the belts, into a bale 30 (Fig. 2).

A bale wrapping mechanism 200 is mounted at the rear of the gate 20 for introducing a wrap material, such as plastic sheet or net, into the bale-forming chamber for enveloping the bale 30 prior to its discharge.

Specifically, the wrapping mechanism 200 includes a frame 202 including opposite vertical sidewalls 204 provided with forward vertical flanges bolted or otherwise secured to corresponding flanges forming vertical rear ends of the gate sidewalls 22. Tops of the sidewalls 204 are defined by horizontal flanges 206. A wrap material housing 208 has opposite sidewalls 210 joined together by a downwardly and rearwardly sloping top wall 212, a vertical rear wall 214, and a horizontal bottom wall 216 which terminates short of the front of the housing for defining a wrap material passage (not shown). The front of the housing 208 is closed by a vertical panel 218 extending between and joined to the gate sidewalls 22. Resting on the bottom wall 216 of the housing 208 is a roll of wrap material 220 which is biased, by means of a U-shaped structure 222 toward a cor ner 224 defined by the junction of a plane containing the bottom wall 216 and the panel 218. The U-shaped structure 222 includes a pair of arms 226 having forward ends respectively pivotally connected to upper forward locations of the sidewalls 210, as at pivots 228, and having rearward ends joined by a crossbar 230 which engages an upper rear area of the roll of wrap material. A rearwardly projecting arm 232 is mounted on the right pivot 228 for rotation with the arm 226 and a spring 234 is coupled between the arm 232 and the right sidewalls 210 so as to urge the crossbar 230 against the roll of wrap material 220. The housing 208 is mounted on the sidewalls 204 by a pair of straps 236 depending from lower rear locations of the sidewalls 210 and respectively coupled to the sidewalls 204 by pivots 238. A pair of spreader roll support legs 240 is secured to and depends from inner front locations of the housing sidewalls 210. Extending between and rotatably mounted adjacent the bottoms of the legs 240 is a wrap material spreader roll 242 comprising a cylindrical roll having spiral flighting (not shown) at opposite ends thereof and with the spirals being of opposite hand for acting on the wrap material to "feed" the opposite edges thereof toward the opposite sidewalls 204. When the housing is in a closed position, as shown, the spreader roll 242 is disposed for rotation about an axis located forwardly of and below an axis of rotation of a wrap material drive or feed roll 244 which is rotatably supported in the opposite sidewalls 204. A rear portion of the periphery of the spreader roll 242 is located very close to and slightly beneath a forward portion of the periphery of the drive roll 244. A rear wrap material drive or feed roll 246 extends between and has opposite ends rotatably supported by the sidewalls 204 at a location below and rearwardly of the axis of rotation of the front drive roll 244. The drive rolls 244 and 246 include respective elastomeric surfaces which are in tight frictional engagement with each other so as to define a pinch point 256 for gripping wrap material fed therebe tween. After a new roll of wrap material 220 is loaded in the open housing 208, a length of wrap material 220 is pulled from the roll, placed over the spreader roll 242 and normally fed into the drive rolls 244 and 246. The housing 208 is then closed resulting in the length of wrap material 257 being tightly wrapped about approximately three-fourths of the periphery of the drive roll 244.

A wrap material guide assembly 258 is provided for guiding wrap material exiting from the drive rolls 244 and 246 towards the bale-chamber inlet located forwardly of the bale-forming belt support roll 24. Specifically the assembly 258 includes a wrap material guide pan 259 constructed of a noncorrosive material capable of presenting a slick guiding surface for the wrap material. Stainless steel and some plastics, for example, exhibit these characteristics. The pan 259 shown here is preferably formed from a rectangular blank of stainless steel sheet and includes a rectangular main section 260 having opposite depending side flanges 262, a front (downstream) flange 264 and a rear (upstream) flange 266. The pan 259 is mounted between lower portions of the gate sidewalls 22. A pair of brackets 268 projects rearwardly from the lower rear locations of the sidewalls 22 and the brackets are pivotally joined to rear ends of the pan side flanges 262 by a pair of axially aligned pins 270. The main section 260 of the pan has a smooth upper surface engaged with bale-forming belt portions 272 extending between the lower rear and lower front rolls 24 and 26, respectively, carried by the gate 20. Joined to the opposite pan side flanges 262 at locations medially of the front and rear ends of the pan are tabs 274 which project outwardly beneath the opposite gate sidewalls 22. A pair of spring assemblies 276 is coupled betweeen the sidewalls 22 and the tabs 274 and acts to bias the pan upwardly about the pivot pins 270 yieldably to hold the section 260 of the pan in engagement with the bale-forming belt portions 272. The forward end of the pan 259 terminates rearwardly of the roll 26. As can best be seen in Figs. 2 and 3, respectively coupled to the forward ends of the side flanges 262 are depending brackets 278 having outturned bottom ends 280, extending parallel to the pan upper surface, and inturned forward ends 282 spaced forwardly of and extending parallel to the pan front flange 264. A pair of brackets 284 is respectively secured to the interior of the gate sidewalls 22 at locations just rearwardly of the roll 26 and the brackets 284 have respective outturned bottom ends 286 parallel to those of the brackets 278. The bracket bottom ends 280 and 286 at each side of the baler are provided with aligned holes and received in the aligned holes is a bolt 288 secured to the bracket bottom end 286 by a nut 290 located between the bracket bottom ends 280 and 286. The bolt 288 has a hole therein located below the bracket ends 280 and containing an abutment cotter pin 291. The distance between the bottom end of the nut 290 and the cotter pin 291 is such as to permit the guide pan 259 to pivot downwardly about the pins 270 in the event that stray crop or a foreign object such as a stone finds its way between the pan 259 and the belt portions 272, such pivoting permitting the stray crop or foreign object to move along the pan without seriously inhibiting the progress of or damaging the wrap material when such is present. If desired, instead of a pair of brackets 284 and a pair of brackets 278 being used, a single bracket 284 can be employed with a single bracket 278.

A guide finger assembly 292 is fixed ahead of the pan 259 for guiding wrap material exiting from the front of the pan around the roll 26 a distance sufficient for the material to be gripped at a pinch point 294 formed by the bale-forming belts 28 and the bale 39. Specifically, the guide finger assembly 292 comprises a downwardly opening, transverse channel member 296 having a web forming a coplanar extension of the upper pan surface, having a rear leg 298 secured to the pan front flange 264 by a plurality of fasteners 300 and having a front (downstream) leg 301 having opposite ends secured to the fronts of the inturned forward ends 282 of the brackets 278 by a pair of fasteners 302. Spaced across and secured to the channel member 296 at locations corresponding to gaps or spaces 304 (Fig. 4) between the bale-forming belts 28 is a plurality of guide fingers 306 in substantially the same plane as the belts. The guide fingers 306 are formed of rods which are circular in cross-section and have a diameter approximately equal to the thickness of the bale-forming belts 28. Considered from rear to front, each finger 306 includes a rear end section (i. e. an upstream end portion) 308 angled upwardly and forwardly through a forward location of the main pan section 260, a straight section or portion 310 welded across the web of the channel member 296, an upwardly offset section or portion 312 extending partly above the belts 28, a second straight section or portion 314 extending partly below the belts 28 and parallel to the straight section 310, and a forward end section (i. e. a downstream end portion) 316 curved arcuately about the bottom and lower front periphery of the roll 26 and having its entire length partly radially outwardly of the belts 28. Thus the upstream end portion 308 is angled to run initially clear of the belts 28 and then into the gaps 304. The straight portion 310 runs in the gaps. The offset portion 312 extends partly proud of the belts 28 on the side thereof opposite to the upstream end portion 308. Finally the second straight portion 314 extends partly proud of the belts 28 on the same side thereof as the upstream end portion as does the downstream end portion 316.

It will be appreciated that the fingers 306 are shaped and mounted so as not to impede the progress of wrap material as it exits the guide pan 259 while buckling the wrap material around said fingers and into the spaces between the belts and directing the wrap material around the roll 26 to the pinch point 294. At the same time, the fingers 306 act to keep the belts 28 in proper alignment so that they will apply an even pull across the width of the wrap material during wrapping of the bale.

The portion of the wrap material guide pan 259 which projects rearwardly beyond the gate 20 includes an upper surface 318 located beneath a plane extending tangentially to the drive rolls 244 and 246 and intersecting the pan section 260 approximately at a pinch point defined between the pan and the bale-forming belts 28 where the latter pass around the bale-forming belt support roll 24. Respectively associated with the drive rolls 244 and 246 are sheet metal wrap material guides 322 and 324 which extend between and are secured to the sidewalls 204. The guides 322 and 324 include respective flat portions extending forwardly from the peripheries of the rolls 244 and 246 at locations above and below the plane extending tangentially to the rolls.

A drive assembly 330 is provided for selectively driving the drive rolls 244 and 246 when it is desired to pull wrap material from the supply roll 220 to wrap a bale in the chamber; a cut-off knife assembly 332 is provided for selectively severing the wrap material at a location just beyond the guide 322 when a desired amount of wrap material has been applied to the bale; and a hydraulically operated latch assembly 334 is associated with the drive and cut-off assemblies for co-ordinating their operation. A detailed description of these assemblies is omitted for brevity since they do not form part of the present invention. Suffice it to say that a hydraulic cylinder 336 forming part of the latch assembly 334 when extended as shown disposes the latch assembly for simultaneously establishing a drive roll drive condition and for holding the cut-off knife assembly in a cocked position. The drive rolls 244 and 246 are then driven to feed a previously severed end of the wrap material to the pan surface 318 and into the pinch point where the bale-forming belt portions 272 engage the wrap material and carry it first along the pan section 260 and then along the guide fingers 206 and into the pinch point 294 where the bale 30 then co-operates with the belts 28 to cause the wrap material to envelope the bale circumference. Once the bale is wrapped as desired, the cylinder is retracted with initial retraction releasing the knife assembly 332 from the latch assembly 334 and thus allowing a spring 338, connected between the drive and latch assemblies 330 and 334, to unload and swing the knife assembly to sever the wrap material. At the same time the spring acts to disengage the drive roll drive. Complete retraction of the cylinder results in latch assembly 334 once again engaging the knife assembly 332 so that extension of the cylinder 336 will again cock the cut-off knife assembly.

It is to be noted that should stray crop material or foreign objects become trapped between the belt portions 272 and the pan section 260 on the guide fingers 306, such crop or objects may be easily removed by merely releasing the spring assemblies 276 and removing the cotter pins 291 to permit the pan 259 to pivot downwardly about the pins 270.

## Claims

1. A machine for forming a cylindrical bale (30) of crop having a baling chamber limited by spaced apart belts (28) trained side-by-side over support rolls (24, 26) characterised in that the machine has a guide assembly (292) for net, sheet or like wrap material (220) for maintaining the material in contact with the belts (28) over one of said rolls (26) comprising a support (296) extending transversely of the belts (28) and fingers (306) extending from the support (296) longitudinally of the belts (28), protruding into the spaces (304) between the belts and curving with the path of the belts (28) about the said roll (26) so that the wrap material (220) maintains contact with the belts (28) and is also directed into the spaces (304) between the belts (28) as it passes into the baling chamber.

2. A machine according to claim 1 characterised in that the support comprises a U-shaped channel member (296) and each of the fingers (306) includes a straight portion (310) rigid with the web of the said member (296) and running in the spaces (304) between the belts.

3. A machine according to claim 2 characterised in that each of the fingers (306) has an upstream end portion (308) angled to run initially clear of the belts (28) and then into the spaces (304) joining the straight portion (310).

4. A machine according to claims 2 and 3 characterised in tha each oft the fingers (306) has an offset portion (312) which follows the straight portion (310) and which extends partly proud of the belts (28) on the side thereof opposite to the upstream end portion (308) upstream of the said roll (26).

5. A machine according to claim 4 characterised in that each of the fingers (306) has a further straight portion (314) which follows the offset portion (312) which extends partly proud of the belts (28) on the same side thereof as the upstream end portion (308).

6. A machine according to claim 5 characterised in that each of the fingers (306) has a downstream end portion (316) which follows the said further straight portion (314), which curves with the path of the belts (28) about the said roll (26) and which extends partly proud of the belts (28) on the same side thereof as the upstream end portion (308).

7. A machine according to any preceding claim characterised in that the fingers (306) are rods circular in cross section with a diameter substantially equal to the thickness of the belts (28) and the width of the spaces (304) between the belts (28).

8. A machine according to any preceding claim characterised in that the inlet of the baling chamber is on the underside of the machine and the support (296) is attached to a guide plate (259), for guiding wrap material to the guide assembly (292), which plate (259) is disposed sufficiently close to the underside of the belts (28) so that the wrap material (220) on it will be gripped between it and the belts (28) and advanced by the belts (28) to the guide assembly (292).

9. A machine according to claim 8 and any of claims 2 to 7 characterised in that the web of the channel member (296) is substantially coplanar with the surface of the guide plate (259).

10. A machine according to claim 8 or 9 characterised in that the upstream end of the guide plate (259) is pi votally mounted on a discharge gate (20) of the machine, the downstream end is anchored to permit limited downward movement thereof and the plate (259) is spring loaded toward the underside of the belts (28).

11. A machine according to any of claim 8 to 10 characterised in that the guide plate (259) has downwardly extending flanges (266, 264, 262) at its upstream and downstream ends and at its sides.

12. A machine according to claims 10 and 11 characterised in that a first bracket (278) with an outturned bottom end (280) is attached to a said side flange (262), a second bracket (284) is attached to the gate (20) ' and has an outturned bottom end (286) above and aligned with that of the first bracket (278), a connector (288) is secured to the bottom end (286) of the second bracket (284) and has a lower end portion slidably received through the bottom end (280) of the first bracket (278), and an abutment (291) is disposed on the lower end of the connector (288) to limit downward movement of the plate (259).

13. A machine according to claims 2 and 12 characterised in that the first bracket (278) has an inturned downstream end (282) secured to a downstream leg (301) of the channel member (296).

**Revendications**

1. Machine pour former une balle cylindrique (30) de matières récoltées, comprenant une chambre de formation de balle délimitée par des courroies mutuellement espacées (28) entrainées côte-à-côte sur des rouleaux supports (24, 26), caractérisée en ce que la machine comprend un ensemble de guidage (292) pour un matériau d'enveloppement (220) de type filet, feuille ou analogue, destiné à maintenir le matériau en contact avec les courroies (28) sur ledit rouleau (26), comportant un support (296) qui s'étend transversalement aux courroies (28) et des doigts (306) qui s'étendent à partir du support (296) dans la direction longitudinale des courroies (28), font saillie dans les espaces (304) entre les courroies et s'incurvent suivant le chemin des courroies (28) autour dudit rouleau (26) de sorte que le matériau d'enveloppement (220) reste en contact avec les courroies (28) et est également dirigé dans les espaces (304) entre les courroies (28) lorsqu'il pénètre dans la chambre de formation de balle.

2. Machine suivant la revendication 1, caractérisée en ce que le support comprend un profilé à section en U (296) et chacun des doigts (306) comprend une partie rectiligne (310) solidaire de l'âme dudit profilé (296) et s'étendant dans les espaces (304) entre les courroies.

3. Machine suivant la revendication 2, caractérisée en ce que chacun des doigts (306) comprend une partie d'extrémité amont (308) inclinée de manière à être initialement dégagée des courroies (28) et à pénétrer ensuite dans les espaces (304) pour se raccorder à la partie rectiligne (310).

4. Machine suivant les revendications 2 et 3, caractérisée en ce que chacun des doigts (306) comprend une partie décalée (312) qui fait suite à la partie rectiligne (310) et qui fait partiellement saillie par rapport aux courroies (28) sur leur côté opposé à la partie d'extrémité amont (308), en amont dudit rouleau (26).

5. Machine suivant la revendication 4, caractérisée en ce que les doigts (306) comprennent chacun une autre partie rectiligne (314) qui fait suite à la partie décalée (312) et qui fait partiellement saillie par rapport aux courroies (28) sur leur côté où se trouve la partie d'extrémité amont (308).

6. Machine suivant la revendication 5, caractérisé en ce que les doigts (306) comprennent chacun une partie d'extrémité aval (316) qui fait suite à la dite autre partie rectiligne (314), qui s'incurve suivant le chemin des courroies (28) autour dudit rouleau (26) et qui fait partiellement saillie par rapport aux courroies (28) du même côté de celles-ci que la partie d'extrémité amont (308).

7. Machine suivant l'une quelconque des revendications précédentes, caractérisée en ce que les doigts (306) sont des tiges de section transversale circulaire et de diamètre sensiblement égal à l'épaisseur des courroies (28) et à la largeur des espaces (304) entre les courroies (28).

8. Machine suivant l'une quelconque des revendications précédentes, caractérisée en ce que l'entrée de la chambre de formation de balle est située du côté inférieur de la machine et le support (296) est fixé à une plaque de guidage (259), pour guider le matériau d'enveloppement vers l'ensemble de guidage (292), cette plaque (259) étant placée suffisamment près de la face inférieure des courroies (28) de sorte que le matériau d'enveloppement (220) qui se trouve sur cette plaque est saisi entre elle et les courroies (28) et avancé par les courroies (28) jusqu'à l'ensemble de guidage (292).

9. Machine suivant la revendication 8, et l'une quelconque des revendications 2 à 7, caractérisée en ce que l'âme du profilé (296) est sensiblement dans le même plan que la surface de la plaque de guidage (259),

10. Machine suivant la revendication 8 ou 9, caractérisée en ce que l'extrémité amont de la plaque de guidage (259) est montée de façon pivotante sur une porte d'évacuation (20) de la machine, l'extrémité aval est attachée de manière à permettre son mouvement limité vers le bas, et la plaque (259) est rappelée élastiquement vers la face inférieure des courroies (28) .

11. Machine suivant l'une quelconque des revendications 8 à 10, caractérisée en ce que la plaque de guidage (259) comporte des brides dirigées vers le bas (266, 264, 262) à ses extrémités amont et aval et sur ses côtés.

12. Machine suivant les revendications 10 et 11, caractérisée en ce qu'un premier support (278) comportant une extrémité inférieure rabattue vers l'extérieur (280) est fixé à une dite bride latérale (262), un deuxième support (284) est fixé à la porte (20) et comporte une extrémité inférieure rabattue vers l'extérieur (286) au-dessus et en alignement avec celle du premier support (278), un connecteur (288) est fixé à l'extrémité inférieure (286) du deuxième support (284) et comporte une partie d'extrémité inférieure reçue de façon coulissante à travers l'extrémité inférieure (280) du premier support (278), et une butée (291) est placée sur l'extrémité inférieure du connecteur (288) pour limiter le mouvement de la plaque (259) vers le bas.

13. Machine suivant les revendications 2 et 12, caractérisée en ce que le premier support (278) a une extrémité aval tournée vers l'intérieur (282), fixée à une aile aval (301) du profilé en U (296).

## Patentansprüche

1. Maschine zum Formen eines zylindrischen Ballens (30) aus Erntegut mit einer Ballenformkammer, die durch im gegenseitigen Abstand angeordnete Bänder (28) begrenzt ist, welche nebeneinander über Stützrollen (24, 25) gelegt sind, dadurch gekennzeichnet, daß die Maschine eine Führungsanordnung (292) für ein netz- oder blattförmiges oder dergleichen Umwickelmaterial (220) aufweist, um das Material in Kontakt mit den Riemen (28) über der genannten Rolle (26) zu halten und die eine Stützeinrichtung (296), welche sich quer zu den Bändern (28) erstreckt, sowie Finger (306) umfaßt, die sich von der Stützeinrichtung (296) aus in Längsrichtung der Riemen (28) erstrecken, in die Zwischenräume (304) zwischen den Bändern vorspringen und entsprechend der Bahn der Bänder (28) um die genannte Rolle (26) gekrümmt sind, so daß das Umwickelmaterial (220) in Kontakt mit den Bändern (28) bleibt und auch in die Zwischenräume (304) zwischen den Bändern (28) geleitet wird, wenn es in die Ballenformkammer gelangt.

2. Maschine nach Anspruch 1, dadurch gekennzeichnet, daß die Stützeinrichtung ein U-förmiges Kanalelement (296) und jeder der Finger (306) einen geraden Abschnitt (310) umfaßt, der starr mit dem Steg des genannten Gliedes (296) ausgebildet ist und in die Zwischenräume (304) zwischen den Bändern reicht.

3. Maschine nach Anspruch 3, dadurch gekennzeichnet, daß jeder der Finger (306) einen stromaufwärts liegenden Endabschnitt (308) aufweist, der abgewinkelt ist, um zunächst frei von den Bändern (28) und dann in die Zwischenräume (304) zu laufen und an den geraden Abschnitt (310) anzuschließen.

4. Maschine nach Anspruch 2 und 3, dadurch gekennzeichnet, daß jeder der Finger (306) einen gekröpften Abschnitt (312) aufweist, der dem geraden Abschnitt (310) folgt und der sich teilweise überstehend über die Bänder (28) auf der Seite der Bänder erstreckt, die dem stromaufwärts liegenden Ende (308) stromaufwärts der genannten Rolle (26) gegenüberliegt.

5. Maschine nach Anspruch 4, dadurch gekennzeichnet, daß die Finger (306) jeweils einen weiteren geraden Abschnitt (314) aufweisen, der dem gekröpften Abschnitt (312) folgt, welcher sich teilweise abgehoben von den Bändern (28) auf der gleichen Seite der Bänder erstreckt, wie der stromaufwärts liegende Endabschnitt (308).

6. Maschine nach Anspruch 5, dadurch gekennzeichnet, daß die Finger (306) jeweils einen stromabwärts liegenden Endabschnitt (316) aufweisen, der dem genannten weiteren geraden Abschnitt (314) folgt, und der sich mit der Bahn der Bänder (28) um die genannte Rolle (26) krümmt und sich teilweise abgehoben von den Bändern (28) auf der gleichen Seite der Bänder erstreckt, wie der stromaufwärts liegende Endabschnitt (308).

7. Maschine nach irgendeinem der vorstehenden Ansprüche, dadurch gekennzeichnet, daß die Finger (306) Stangen von kreisförmigem Querschnitt und einem Durchmesser im wesentlichen gleich der Dicke der Bänder (28) und der Weite der Abstände (304) zwischen den Bändern (28) sind.

8. Maschine nach irgendeinem der voranstehenden Ansprüche, dadurch gekennzeichnet, daß der Einlaß der Ballenformkammer sich auf der Unterseite der Maschine befindet und die Stützeinrichtung (296) an einer Führungsplatte (259) angebracht ist, um das Umwickelmaterial zu der Führungseinrichtung (292) zu leiten, welche Platte (259) ausreichend dicht an der Unterseite der Bänder (28) angeordnet ist, so daß das Umwickelmaterial (220) auf der Platte zwischen der Platte und den Bändern (28) erfaßt und durch die Bänder (28) zu der Führungsanordnung (292) vorwärts transportiert wird.

9. Maschine nach Anspruch S und irgendeinem der Ansprüche 2 bis 7, dadurch gekennzeichnet, daß der Steg des Kanalgliedes (296) im wesentlichen in der gleichen Ebene wie die Fläche der Führungsplatte (259) liegt.

10. Maschine nach Anspruch 8 oder 9, dadurch gekennzeichnet, daß das stromaufwärts liegende Ende der Führungsplatte (259) schwenkbar auf einem Entladetor (20) der Maschine montiert ist, das stromabwärts liegende Ende verankert ist, um eine begrenzte Bewegung nach unten dieses Endes zu gestatten und daß die Platte (259) durch Feder in Richtung auf die Unterseite der Bänder (28) vorgespannt ist.

11. Maschine nach irgendeinem der Ansprüche 8 bis 10, dadurch gekennzeichnet, daß die Führungsplatte (259) nach unten ragende Flansche (266, 264, 262) an ihren stromaufwärts liegenden und stromabwärts liegenden Enden und an ihren Seiten aufweist.

12. Maschine nach Anspruch 10 und 11, dadurch gekennzeichnet, daß ein erster Halter (278) mit einem nach außen gebogenen Bodenende (280) an einem genannten Seitenflansch (262) angebracht ist, ein zweiter Halter (284) an dem Tor (20) angebracht ist und ein nach außen gebogenes Bodenende (286) oberhalb und in Fluchtung mit dem des ersten Halters (278) aufweist, daß ein Verbindungsglied (288) an dem bodenseitigen Ende (286) des zweiten Halters (284) befestigt ist und einen unteren Endabschnitt aufweist, der gleitend durch das Bodenende (280) des ersten Halters (278) aufgenommen ist, und daß ein Anschlag (291) am unteren Ende des Verbindungsgliedes (288) angeordnet ist, um die nach unten gerichtete Bewegung der Platte (259) zu begrenzen.

13. Maschine nach den Ansprüchen 2 und 12, dadurch gekennzeichnet, daß der erste Halter (278) ein nach innen gekrümmtes unteres Ende (282) aufweist, das an einem stromabwärts liegenden Schenkel (301) des kanalförmigen Gliedes (296) befestigt ist.

FIG. 1

FIG. 2

FIG. 3

FIG. 4

EP 0 252 458 B1